# EUROPEAN PATENT APPLICATION

(11) **EP 2 957 517 A1**
(43) Date of publication of application: **23.12.2015**
(21) Application number: 14752244.5
(22) Date of filing: 21.01.2014
(51) Int. Cl.: B65D 21/02, B65D 81/32, B65D 21/024, A47G 19/06, A47G 23/032, A47G 21/00

(54) **FOOD CONTAINER COMPRISING A DRINK SUPPORT**

(30) Priority: 12.02.2013 ES 201330161
(71) Applicant: WALK-EAT, S.L., 43003 Tarragona (ES)
(72) Inventor: REÑÉ PORTÉ, José, 25008 Lleida (ES)
(74) Representative: Ungria López, Javier
(86) International application number: PCT/ES2014/070038
(87) International publication number: WO 2014/125141

(57) **Abstract**

The invention refers to a food container (1) with a support (11) for drinks, comprising a set of side walls (10), a lower supporting surface (5) and an accessory (2) designed to receive a cup (9). According to the invention, the accessory (2) in turn comprises a support (11) equipped with a hole (7) into which the cup (9) is inserted, and a tab (8) for securing the accessory (2) to one of the side walls (10) of the container. The tab (8) extends from the support (11) and is defined by a fold line allowing the support (11) to be folded/unfolded. The food container (1) of the invention can be used to transport both food and drink together with a single hand or arm, improving user comfort.

## Description

### OBJECT OF THE INVENTION

The object of the present invention refers to a food container comprising a special accessory to support a cup. Since the cup and the food are held in the same container, the consumer can transport both food and drink together with a single hand or arm.

It is of particular use in the food industry, especially in the hotel and catering industry, as well as for home use.

### TECHNICAL PROBLEM TO BE SOLVED AND BACKGROUND OF THE INVENTION

Nowadays it is increasingly common to see people eating food that is prepared and served to be eaten quickly in specialized places such as fast food restaurants, cinemas, theatres, concerts, etc.

It often happens that a customer goes to one of these places, buys one or more items of food and drink, and is faced with the problem that he cannot carry everything using only his two hands and takes the risk of dropping the food and drink due to the difficulty of carrying everything together, so that the customer has to struggle using his arms and body in order to be able to carry everything at the same time.

The object of the present invention solves this issue by introducing a food container comprising a special accessory to support a cup.

Therefore, the present invention solves the aforementioned problems by means of a food container that can be used to transport both food and drink together with a single arm or hand, improving user comfort.

### DESCRIPTION OF THE INVENTION

The present invention refers to a food container with a support for drinks, comprising a set of side walls and a lower supporting surface.

Said container further comprises:
- a special accessory designed to receive a cup, that in turn comprises:
   ∘ the support equipped with a hole into which the cup is inserted, and
   ∘ a tab for securing the accessory to one of the walls of the container,
where the tab extends from the support and is defined by a fold line, allowing the support to be folded/unfolded.

The support is configured so that it folds at the fold line and lays flat against one of the outer faces of the side walls of the container where it is secured.

According to the first embodiment, one of the side walls comprises a slot placed at the bottom, halfway up or at the top, so that it is located above the lower supporting surface.

The tab of the accessory is inserted inside the slot towards the inner face of one of the side walls of the container, in order to secure the accessory to the container.

According to a second embodiment, the accessory is secured to the container by securing the tab to the outer face of one of the side walls of the container.

The tab is secured to the outer face of one of the side walls of the container at the bottom, halfway up or at the top.

There are different ways to design the hole of the support, which include:
- The hole is defined by a closed diecut line,
- the hole is covered by a transparent sheet of paper,
the hole is factory made

### BRIEF DESCRIPTION OF THE FIGURES

To complete the description and in order to give a better understanding of the characteristics of the invention, this descriptive report is accompanied by a series of drawings that are an integral part of the report, wherein, for illustration purposes and without limitation, the following has been represented:
Figure 1 refers to the container of the invention with the support of the accessory folded according to the first embodiment, where the container includes a slot where the tab of the accessory is inserted and glued to the inner face of the side wall of the container.

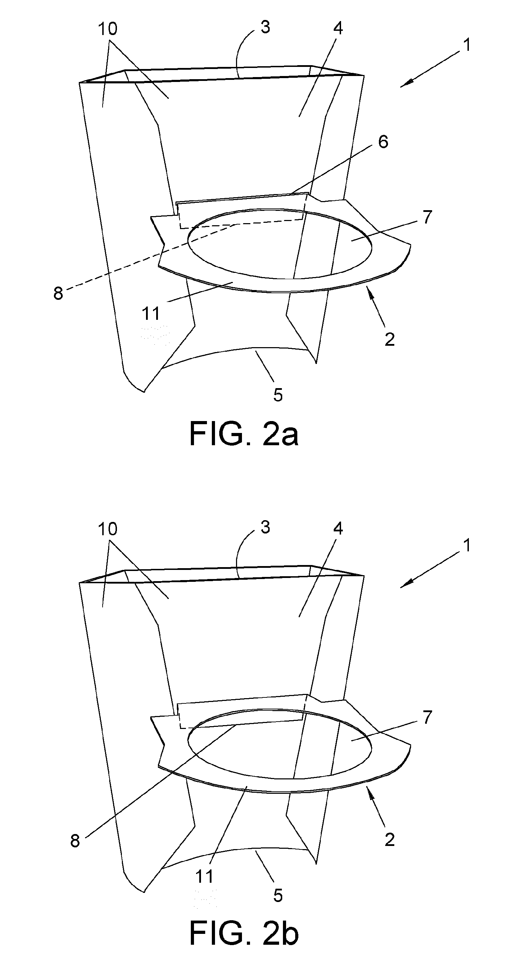

Figure 2a refers to the container of the previous figure, with the support of the accessory unfolded.
Figure 2b refers to an embodiment like the previous figure with the special feature that the accessory is secured to the outer face of the side wall of the container, so that the slot is not needed.
Figure 3 shows an image of an application of the invention where a cup has been included, which is held with one hand without having to hold the container with the other hand.

A list of the different components that have been represented in the drawings and that comprise the invention is detailed below:
1. Container.
2. Accessory.
3. Inner face of the side wall of the container.
4. Outer face of the side wall of the container.
5. Lower supporting surface.
6. Slot.
7. Hole.
8. Tab.
9. Cup.
10. Side walls.
11. Support.

### DETAILED DESCRIPTION

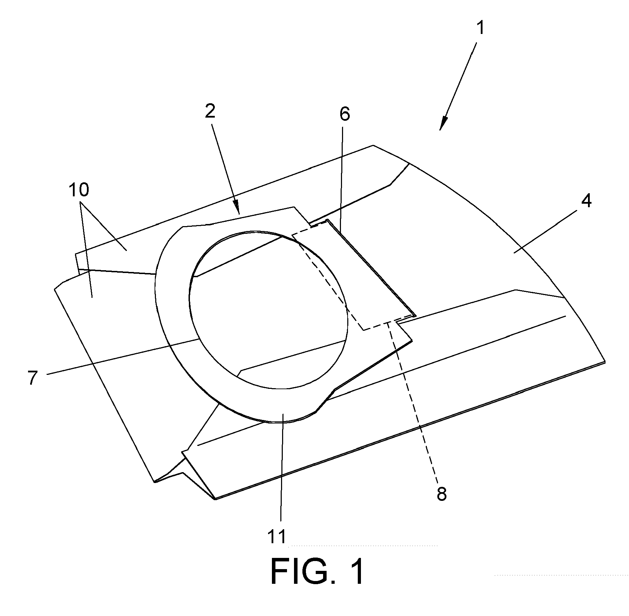

As shown on figure 1, the image depicts a food container (1) with a support (11) for drinks, comprising a set of side walls (10) and a lower supporting surface (5) with an additional accessory (2) designed to receive a cup (9) with ice, or a different object such as a bottle, so that it does not take any space when it is folded since it is folded flat against one of the outer faces (4) of the side walls of the container.

The food containers (1) can carry food such as chips or fries, pop corn, or other types of fast foods, either to eat at the restaurant or to take away.

The container (1) is made of cardboard and is folded at the corners, therefore it is manufactured in the usual way this type of containers (1) are made. Obviously the container (1) can have any geometric shape and can be made with any material.

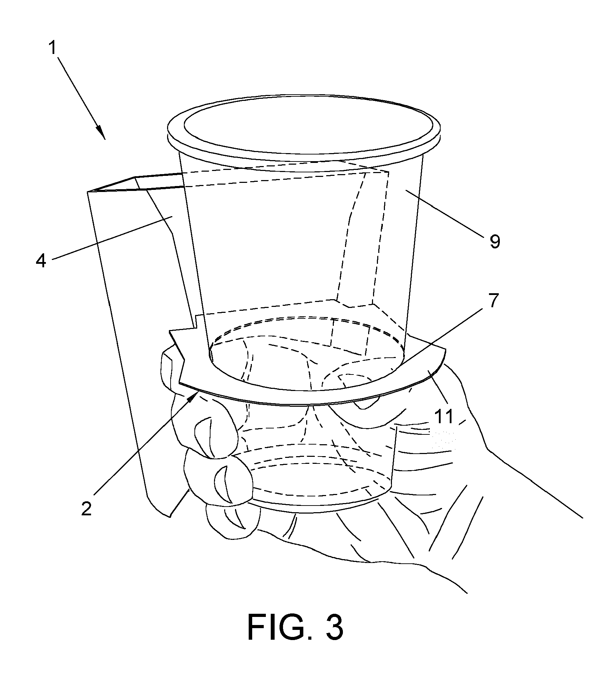

Figure 3 shows how the user holds the plastic cup (9), which is usually the heavier component, using only one hand without having to hold the container (1) as well.

Moreover, since this kind of food is usually served alongside cups (9) with a straw, it would allow the user to drink without spilling the drink.

The accessory (2) comprises:
- the support (11) equipped with a hole (7) into which the cup (9) is inserted, and
- a tab (8) for securing the accessory (2) to one of the side walls (10) of the container,
where the tab (8) extends from the support (11) and is defined by a fold line, allowing the support (11) to be folded/unfolded.

The hole (7) can be designed in many different geometric shapes so that it can adapt to the shape of the cup (9); for example, a circle, a polygon, etc.

The preferred embodiment features a circular hole, since the type of drinks that are bought with food are usually sold in cups (9) shaped like conical cylinders.

In a preferred embodiment, the hole (7) is centred in relation to the support (11) so that the cup (9) does not threaten the stability of the assembly; however, in other embodiments the hole (7) can be located in any position other than the centre in relation to the support (11).

According to a first embodiment, one of the side walls (10) comprises a small slot (6) placed at a specific height so that it is located above the lower supporting surface (5).

The tab (8) is inserted into said slot (6) towards the inner face (3) of one of the side walls of the container.

The way the slot (6) is placed will depend on the type of container (1) used, since it can be placed halfway up one of the side walls (10) of the container (1), at the top or at the bottom, so that the slot (6) is set parallel to the lower supporting surface (5).

It is possible to add more slots (6) to the side walls (10) of the container if it is necessary to carry cups (9) of a larger size than the standard, or when more than one cup (9) needs to be carried.

According to a second embodiment, the accessory (2) is secured to the container (1) by means of a tab (8) secured to the outer face (4) of one of the side walls of the container. It can be secured at different heights, halfway up, at the top or at the bottom of the side walls (10) of the container (1) so that it is secured in the best possible way.

In both embodiments, there are different ways to design of the hole (7); either the hole is created by pressing the fingers on a closed diecut line of the container (1), or it is covered by a transparent sheet of paper or another material so that said transparent paper can be easily removed, or the hole (7) is factory made.

In the case when no drinks are bought with the food, the support (11) can remain in its folded configuration.

The tab (8) is attached to the container (1) by glueing it, sealing it or any other known way.

The way the cup (9) is held determines the way the container (1) is held.

The present invention is not limited by the embodiment disclosed herein. Other embodiments can be made by experts in the art following the present description. In consequence, the scope of the invention is defined by the following claims.

## Claims

1. A food container (1) with a support (11) for drinks, comprising a set of side walls (10) and a lower supporting surface (5) **characterized in that** it further comprises:
- an accessory (2) designed to receive a cup (9), which in turn comprises:
• the support (11) equipped with a hole (7) into which the cup (9) is inserted, and
• a tab (8) for securing the accessory (2) to one of the side walls (10) of the container,
where the tab (8) extends from the support (11) and is defined by a fold line, allowing the support (11) to be folded/unfolded.

2. A food container (1) with a support (11) for drinks according to claim 1, **characterized in that** the hole (7) in the support (11) is located at the centre.

3. A food container (1) with a support (11) for drinks as claimed in any of the claims 1 or 2, **characterized in that** one of the side walls (10) comprises a slot (6) where the tab (8) is inserted, which is secured to the inner face (3) of the side wall of the container and where the slot (6) is placed at a specific height so that it is located above the lower supporting surface (5).

4. A food container (1) with a support (11) for drinks according to claim 3, **characterized in that** the slot (6) is located at the top, halfway up, or at the bottom of one of the side walls (10) of the container (1).

5. A food container (1) with a support (11) for drinks as claimed in any of the claims 1 or 2, **characterized in that** the tab (8) is secured to the outer face (4) of one of the side walls (10) of the container (1).

6. A food container (1) with a support (11) for drinks according to claim 5, **characterized in that** the tab (8) is secured to the top, halfway up or at the bottom of the outer face (4) of one of the side walls (10) of the container (1).

7. A food container (1) with a support (11) for drinks as claimed in any of the claims 4 or 6, **characterized in that** the hole (7) is created by pressing on a closed diecut line.

8. A food container (1) with a support (11) for drinks as claimed in any of the claims 4 or 6, **characterized in that** the hole (7) is covered by a transparent sheet of a paper that can be torn to insert the cup (9).

9. A food container (1) with a support (11) for drinks as claimed in any of the claims 4 or 6, **characterized in that** the hole (7) is factory made.

10. A food container (1) with a support (11) for drinks as claimed in any one of the claims 7 to 9, **characterized in that** the support (11) is configured so that it folds at the fold line and lays flat against one of the outer faces (4) of the side walls (10) of the container (1) where it is secured.
